# EUROPÄISCHE PATENTSCHRIFT

(11) **EP 3 164 308 B1**
(45) Veröffentlichungstag und Bekanntmachung des Hinweises auf die Patenterteilung: **13.11.2019**
(21) Anmeldenummer: 15737978.5
(22) Anmeldetag: 03.07.2015
(51) Int. Cl.: B60W 30/06, G08G 1/14, B62D 15/02

(54) **ANORDNUNG ZUM STEUERN JEWEILS EINER EINRICHTUNG VON KRAFTFAHRZEUGEN UND ZUGEHÖRIGES BETRIEBSVERFAHREN**
ARRANGEMENT FOR CONTROLLING A DEVICE OF MOTOR VEHICLES RESPECTIVELY AND CORRESPONDING OPERATING METHOD
AGENCEMENT DE COMMANDE D'UN ÉQUIPEMENT DE VÉHICULES AUTOMOBILE RESPECTIVEMENT ET PROCÉDÉ DE FONCTIONNEMENT CORRESPONDANT

(30) Priorität: 05.07.2014 DE 102014010002
(43) Veröffentlichungstag der Anmeldung: 10.05.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE); EL-ASSAAD, Ahmad, 90402 Nürnberg (DE)
(74) Vertreter: Bauer, Dominik Michael
(86) Internationale Anmeldenummer: PCT/EP2015/001348
(87) Internationale Veröffentlichungsnummer: WO 2016/005040

(56) Entgegenhaltungen:
- DE-A1-102008 007 223
- DE-A1-102008 007 834
- DE-A1-102011 084 366
- DE-A1-102012 007 986
- US-A1- 2009 212 906

## Beschreibung

Die Erfindung betrifft eine Anordnung zum Steuern jeweils einer Einrichtung von Kraftfahrzeugen.

Üblicherweise schalten Fahrzeuge, nachdem sie abgestellt werden worden sind, ihre Systeme weitgehend in einen Ruhemodus, um Energie zu sparen. Um das Fahrzeug aus diesem Ruhemodus zurück in einen aktiven Modus zu versetzen, wird beispielsweise durch das Aussenden eines Signals einen Sender auf einer bestimmten Frequenz bzw. auf einem Kanal ein drahtloses Signal gesendet. Die empfangenen Daten werden von einer Einrichtung des Kraftfahrzeugs verarbeitet, die dazu aus dem Ruhemodus in den aktiven Modus wechselt, und mit einem internen Schlüssel verglichen. Stimmt der gesendete Schlüssel mit dem internen Schlüssel des Kraftfahrzeugs überein, kann eine Steuerung des Kraftfahrzeugs durch einen Sender erfolgen. Stimmt der Schlüssel nicht mit dem internen Schlüssel überein, ist also ein anderes Fahrzeug von dem Sender adressiert, begibt sich die Einrichtung des Fahrzeugs zurück in den Ruhemodus.

Speziell bei selbstfahrenden Fahrzeugen ist es in Bereichen mit hoher Fahrzeugdichte, beispielsweise einem Parkhaus, notwendig, einen automatisierten Ausparkvorgang mittels eines Senders zu aktivieren, falls ein Kunde sein Fahrzeug bereitgestellt haben möchte. Da in solchen Fällen üblicherweise viele Fahrzeuge auf engem Raum beieinander stehen, muss die Einrichtung eines jeden Fahrzeugs bei einer Aussendung des Schlüssels aufgeweckt werden, um festzustellen, ob der gesendete Schlüssel dem internen Schlüssel entspricht. Da dies bei einer Vielzahl der Fahrzeuge für das einzelne Fahrzeug nicht der Fall ist, wird die Einrichtung des Kraftfahrzeugs häufig unnötig aus dem Ruhemodus geholt, wodurch Energie verschwendet wird. Diese Energie geht zulasten der Hauptbatterie des Fahrzeugs, welche dadurch beispielsweise in ihrer Kapazität größer als eigentlich notwendig konzipiert werden muss.

Aus DE 102008007834 A ist eine Anordnung bestehend aus einer Einrichtung und einer mobilen Vorrichtung mit Frequenzauswahl bekannt.

Der Erfindung liegt daher die Aufgabe zugrunde, eine demgegenüber verbesserte Vorrichtung anzugeben, bei der Energie gespart wird.

Gelöst wird diese Aufgabe durch die Anordnung der eingangs genannten Art gemäß den Merkmalen des Anspruchs 1.

Demnach kann jedem Kraftfahrzeug im Bereich der Vorrichtung eine eigene Frequenz und/oder ein Kanal zugewiesen werden, während sich das Fahrzeug im aktiven Modus befindet. Anschließend kann das Fahrzeug in den Ruhemodus versetzt werden und muss anschließend auf der festgelegten Frequenz von einem Sender angesprochen werden. Der Vorteil der Erfindung liegt darin, dass jedem Fahrzeug eine eigene Sende- und/oder Empfangsfrequenz zugewiesen wird. Dadurch wird vermieden, dass alle Fahrzeuge im Wirkungsbereich der Vorrichtung aus dem Ruhemodus in einen aktiven Modus versetzt werden, wenn ein drahtloses Signal ausgesendet wird. Stattdessen wird jedes Fahrzeug nur dann aus dem Ruhemodus in den aktiven Modus versetzt, wenn auf der für das Fahrzeug festgelegten Frequenz und/oder dem festgelegten Kanal ein drahtloses Signal gesendet wird. Dadurch wird der Energiebetrag eingespart, der andernfalls durch das ständige Versetzen aller Fahrzeuge aus dem Ruhemodus in den aktiven Modus aufgewendet würde. Dadurch kann beispielsweise eine Batterie des Kraftfahrzeugs mit geringerer Kapazität ausgelegt werden.

Die Frequenz und/oder der Kanal wird durch die Vorrichtung oder die Einrichtung des Kraftfahrzeugs festgelegt. Bei der Vorrichtung kann es sich um einen zentralen Server handeln, der die Kraftfahrzeuge den jeweiligen vergebenen Frequenzen und/oder Kanälen zuordnet. Dieser verfügt über eine Kommunikationseinheit, mittels der das drahtlose Signal übertragbar ist. Dieses Signal kann von der Einrichtung des Kraftfahrzeugs empfangen werden. Bei der Einrichtung des Kraftfahrzeugs kann es sich um jede Einrichtung handeln, die zur drahtlosen Kommunikation ausgelegt ist. So können beispielsweise vorhandene Module des Kraftfahrzeugs zur Übertragung via Bluetooth, WLAN, NFC oder mobilem Internet verwendet werden. Alternativ kann die Kommunikation über eine Mobilkommunikationsverbindung erfolgen.

Zweckmäßigerweise ist darauf zu achten, dass in dem verwendeten Frequenzband ausreichend viele Kanäle zur Verfügung stehen. Im Beispiel eines Parkhauses bedeutet das, dass optimalerweise mindestens so viele Kanäle wie Stellplätze verfügbar sind. Andernfalls müssen eine entsprechende Anzahl der Kanäle mehrfach belegt werden. Selbst wenn dies wegen eines begrenzt verfügbaren Frequenzbands erforderlich ist, verringert dies den Energieverbrauch durch unnötiges Aufwecken aller Kraftfahrzeuge aus dem Ruhemodus entsprechend, da gegenüber den im Stand der Technik bekannten Vorrichtungen nur ein Teil der Fahrzeuge und nicht alle aus dem Ruhemodus geholt werden.

Weiterhin ist es vorteilhaft, dass durch die Zuweisung einer bestimmten Frequenz und/oder eines Kanals an jede Einrichtung jedes Fahrzeugs im Empfangsbereich der Vorrichtung nur auf der eingestellten Frequenz und/oder dem Kanal auf Empfang bleiben muss. Andernfalls müsste das komplette Frequenzspektrum abgescannt werden, um ein etwaiges Signal empfangen zu können. Dadurch kann im Ruhemodus der Energiebedarf deutlich reduziert werden.

Eine vorteilhafte Weiterbildung der Erfindung sieht vor, dass die Vorrichtung ortsfest im Bereich einer Parkfläche, insbesondere in einem Parkhaus, angeordnet ist. Speziell bei einem automatisierten Parkvorgang, bei dem ein Fahrer sein Kraftfahrzeug am Eingang des Parkhauses verlässt und einen Parkvorgang über die Vorrichtung auslöst, kann diese ein automatisiertes Parken des Kraftfahrzeugs durchführen. Dazu ist es zweckmäßig, dass die Vorrichtung eine bestimmte Frequenz festlegt, auf der das drahtlose Signal an die Einrichtung des Kraftfahrzeugs gesendet wird.

Weiterhin ist es besonders zweckmäßig, dass die Vorrichtung in der Lage ist, mittels wenigstens eines weiteren Signals, das Kraftfahrzeug zu parken. Daher kann die Vorrichtung das Fahrzeug automatisiert einparken, und dieses anschließend in den Ruhemodus versetzen. Die Frequenz, auf der das drahtlose Signal gesendet wird, kann dabei entweder beim Einfahren in das Parkhaus, oder vor dem Abstellen des Kraftfahrzeugs festgelegt werden. Besonders dann, wenn das Einstellen oder Festlegen der Frequenz bereits am Eingang des Parkhauses vorgenommen wird und auch das weitere Signal, das dafür ausgelegt ist, das Kraftfahrzeug und/oder eine Funktion des Kraftfahrzeugs zu steuern, auf derselben Frequenz und/oder dem festgelegten Kanal gesendet wird, kann bereits mit Befahren des Parkhauses vermieden werden, dass andere sich im Parkhaus befindende Kraftfahrzeuge unnötig aus dem Ruhemodus in den aktiven Modus versetzt werden.

Eine weitere Ausgestaltungsform der Erfindung kann vorsehen, dass ein tragbares Mobilteil zusätzlich zu der Vorrichtung dazu ausgebildet ist, das drahtlose Signal zu senden und/oder zu empfangen. Mittels dieses tragbaren Mobilteils, das als separates Gerät ausgebildet sein kann oder in einen Schlüssel des Kraftfahrzeugs integriert ist, kann der Fahrer des Kraftfahrzeugs ebenfalls das drahtlose Signal senden und/oder empfangen. Dadurch ist es möglich einen Parkvorgang, sei es beim Ausparken oder beim Einparken, automatisiert durch die Vorrichtung auszulösen. Eine festgelegte Frequenz und/oder ein festgelegter Kanal können damit auch in dem Mobilteil gespeichert werden. Als tragbares Mobilteil ist in besonders bevorzugter Form ein Mobiltelefon einsetzbar. Der Fahrer kann dadurch mittels seines Mobiltelefons einen Ausparkvorgang des Fahrzeugs auslösen. Weiterhin können über weitere Signale weitere Funktionen des Kraftfahrzeugs gesteuert werden, so ist eine Ansteuerung der Heizung, der Klimaanlage oder der Multimediaanlage des Kraftfahrzeugs möglich.

Die Einrichtungen der Kraftfahrzeuge sind dazu ausgebildet, mittels einer Kommunikationseinheit ein drahtloses Signal zu empfangen, wobei die Vorrichtung durch Aussenden des Signals das Kraftfahrzeug aus dem Ruhemodus in den aktiven Modus versetzt, wobei die Vorrichtung dazu ausgebildet ist, in dem aktiven Modus eine Frequenz und/oder ein Kanal zum Senden und/oder Empfangen des drahtlosen Signals festzulegen, wobei nach dem Festlegen der Frequenz und/oder des Kanals das Signal durch die Einrichtung nur auf der festgelegten Frequenz und/oder dem festgelegten Kanal empfangbar und das Kraftfahrzeug aus dem Ruhemodus in den aktiven Modus versetzbar ist.

Die Einrichtung ist somit im Kraftfahrzeug angeordnet und kann das drahtlose Signal senden und/oder empfangen. Dabei wird der Kanal und/oder die Frequenz, auf der das drahtlose Signal gesendet und/oder empfangen wird, entweder von der Vorrichtung oder von der Einrichtung des Kraftfahrzeugs festgelegt.

Ferner betrifft die Erfindung ein Verfahren zum Steuern jeweils einer Einrichtung von Kraftfahrzeugen gemäß den Merkmalen des Anspruchs 5.

Bei dem erfindungsgemäßen Verfahren ist vorgesehen, dass die Einrichtung des Kraftfahrzeugs oder die Vorrichtung die Frequenz und/oder den Kanal festlegt.

Es ist möglich, dass ein tragbares Mobilteil oder die Vorrichtung das drahtlose Signal sendet und/oder empfängt. Dieses kann bevorzugt zusätzlich zu der Einrichtung des Kraftfahrzeugs vorgesehen und vorhanden sein. Mittels des tragbaren Mobilteils ist es demnach einem Benutzer möglich, das drahtlose Signal auszusenden, um somit die Einrichtung des Kraftfahrzeugs in einen Ruhemodus zu versetzen oder aus dem Ruhemodus in einen aktiven Modus zu versetzen. Es ist ebenso möglich, dass das tragbare Mobilteil die festgelegte Frequenz und/oder den festgelegten Kanal von der Vorrichtung oder der Einrichtung des Kraftfahrzeugs empfängt. Dies ist erforderlich, damit die Einrichtung des Kraftfahrzeugs auch mittels des tragbaren Mobilteils aus dem Ruhemodus in den aktiven Modus oder umgekehrt versetzt werden kann.

Eine Weiterbildung des erfindungsgemäßen Verfahrens sieht vor, dass das Kraftfahrzeug geparkt wird, wenn ein entsprechendes Signal von der jeweiligen Einrichtung der Kraftfahrzeuge empfangen wird.

Dieses Signal kann zum einen von der Vorrichtung oder von dem tragbaren Mobilteil gesendet werden. Dadurch kann in einer besonders bevorzugten Ausgestaltungsform der Erfindung ein Parkvorgang des Fahrzeugs ausgelöst werden. Somit kann der Fahrer beispielsweise mittels des tragbaren Mobilteils eine Bereitstellung seines Fahrzeugs auslösen, was durch ein Aussenden des drahtlosen Signals ausgelöst wird. Dies kann von der Vorrichtung oder von der Einrichtung des Kraftfahrzeugs empfangen werden. Durch das Empfangen des drahtlosen Signals wird die Einrichtung aus dem Ruhemodus in den aktiven Modus versetzt. Anschließend kann die Vorrichtung mittels eines entsprechenden Signals einen Aus- oder Einparkvorgang des Kraftfahrzeugs auslösen und dieses oder dessen Funktionen über entsprechende Signale steuern.

Weitere Vorteile und Einzelheiten der Erfindung werden anhand von Ausführungsbeispielen unter Bezugnahme auf die Zeichnungen beschrieben. Die Zeichnungen sind schematische Darstellungen und zeigen:
- Fig. 1: eine Draufsicht auf eine Parkfläche mit einer erfindungsgemäßen Vorrichtung;
- Fig. 2: ein Frequenzdiagramm; und
- Fig. 3: ein Ablaufdiagramm des erfindungsgemäßen Verfahrens.

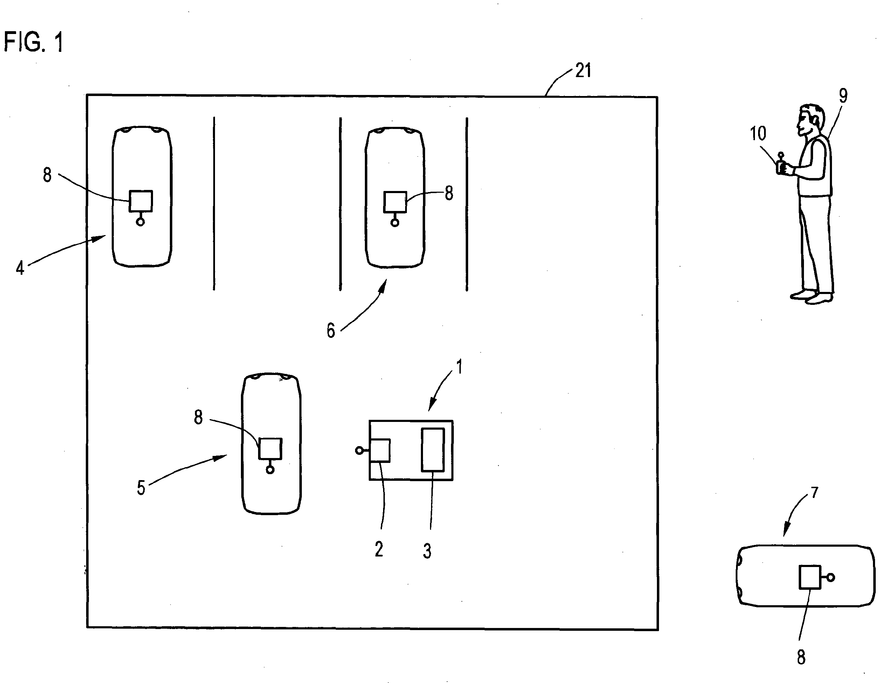

Fig. 1 zeigt eine Draufsicht auf eine Parkfläche 21 mit einer Vorrichtung 1, die eine Kommunikationseinheit 2 und eine Datenbank 3 aufweist. Die Vorrichtung 1 ist dabei positionsfest an der Parkfläche angeordnet. Im Bereich der Parkfläche 21 befinden sich Kraftfahrzeuge 4 - 7, die jeweils über eine Einrichtung 8 verfügen. Die Kraftfahrzeuge 4 und 6 sind dabei auf Abstellplätzen geparkt. Die Vorrichtung 1 steuert in der in Fig. 1 gezeigten Situation das Kraftfahrzeug 5 in einem automatisierten Parkvorgang. Dazu sendet die Vorrichtung 1 mittels ihrer Kommunikationseinheit 2 ein drahtloses Signal an die Einrichtung 8 des Kraftfahrzeugs 5. Die Kraftfahrzeuge 4 und 6 befinden sich im Ruhemodus. Diese werden durch das Senden der drahtlosen Signale der Kommunikationseinheit 2 der Vorrichtung 1 an das Kraftfahrzeug 5 nicht aus dem Ruhemodus in einen aktiven Modus versetzt, da die Vorrichtung 1 zuvor jedem der Fahrzeuge eine eigene Frequenz 17 - 20 zugeordnet hat, die in der Datenbank 3 der Vorrichtung 1 gespeichert ist.

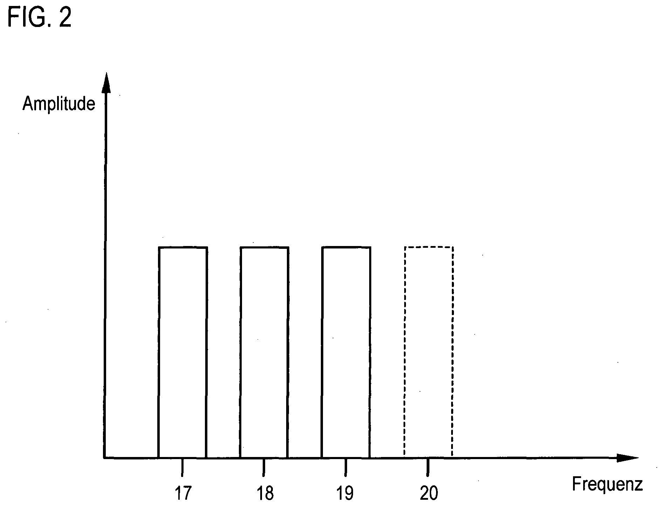

Die unterschiedlichen Frequenzen bzw. die einzelnen Kanäle 17 - 20 der Kraftfahrzeuge 4 - 7 sind am besten in Fig. 2 dargestellt. Fig. 2 zeigt hierbei ein Frequenzdiagramm, bei dem die vier Kanäle 17 - 20 der vier Kraftfahrzeuge 4 - 7 dargestellt sind, wobei auf der waagerechten Achse die Frequenz und auf der senkrechten Achse die Amplitude eines Signals dargestellt ist. Es ist erkennbar, dass die Frequenzbreite der einzelnen Kanäle (17 - 20) nicht zu einer Überlagerung führt. Die Frequenzbreite der einzelnen Kanäle (17 - 20) sowie der Abstand der einzelnen Kanäle (17 - 20) zueinander ist hierbei nur schematisch dargestellt. Der Kanal 20 ist hierbei gestrichelt eingezeichnet, da er frei ist, bis der Kanal 20 dem Kraftfahrzeug 7, das vor der Parkfläche 21 steht, zugewiesen wird.

Der automatisierte Parkvorgang in Fig. 1 erfolgt daher durch das Aussenden des drahtlosen Signals durch die Kommunikationseinheit 2 der Vorrichtung 1 an die Einrichtung 8 des Kraftfahrzeugs 5. Da die Aussendung auf dem Kanal 18 des Kraftfahrzeugs 5 erfolgt, werden die Einrichtungen 8 der Kraftfahrzeuge 4 und 6 nicht aus dem Ruhemodus in den aktiven Modus versetzt, da diesen die Kanäle 17 bzw. 19 zugeordnet sind.

Sobald der automatische Parkvorgang des Kraftfahrzeugs 5 beendet ist, wird die Einrichtung 8 des Kraftfahrzeugs 5 ebenfalls in den Ruhemodus versetzt.

Dies kann durch die Vorrichtung 1 oder die Einrichtung 8 oder zeitgesteuert erfolgen.

Das Kraftfahrzeug 7 befindet sich vor der Parkfläche 21. Um einen automatischen Parkvorgang zu ermöglichen, kommuniziert die Einrichtung 8 des Kraftfahrzeugs 7 mit der Kommunikationseinheit 2 der Vorrichtung 1. Die Vorrichtung 1 sucht dabei nach einem freien Übertragungskanal 20 in der Datenbank 3 und trägt das Kraftfahrzeug 7 auf dem freien Platz ein. Die Kommunikation vor dem Eintrag des Kraftfahrzeugs 7 in die Datenbank 3 kann auf einem allgemeinen Übertragungskanal erfolgen. Nachdem das Kraftfahrzeug 7 in der Datenbank 3 der Vorrichtung 1 eingetragen wurde, kann der automatische Parkvorgang ausgelöst werden. Dazu wird der Einrichtung 8 des Fahrzeugs 7 der Kanal 20 zugeordnet.

Weiterhin ist in Fig. 1 dargestellt, dass der Fahrer 9 des Kraftfahrzeugs 6 sich im Bereich der Parkfläche 21 aufhält. Dieser ist im Besitz eines tragbaren Mobilteils 10. Gemäß diesem Ausführungsbeispiel ist das Mobilteil 10 als Mobiltelefon ausgebildet. In dem Mobilteil 10 ist ebenso wie in der Datenbank 3 der Vorrichtung 1 der Kanal 19 des Kraftfahrzeugs 6 in einem Speicher hinterlegt. Dies kann anhand der Fahrzeug-ID, wie beispielsweise der Seriennummer erfolgen. Somit ist eine Zuordnung von Kraftfahrzeug 4 - 7 und Kanal 17 - 20 möglich. Der Fahrer 9 sendet mittels des Mobilteils 10 ein drahtloses Signal an die Kommunikationseinheit 2 der Vorrichtung 1, um einen Ausparkvorgang des Kraftfahrzeugs 6 auszulösen. Das drahtlose Signal wird hierbei auf der Frequenz bzw. dem Kanal 16 gesendet, der für das Kraftfahrzeug 6 in der Datenbank 3 der Vorrichtung 1 sowie dem Mobilteil 10 gespeichert ist. Durch Empfangen des drahtlosen Signals ist die Vorrichtung 1 in der Lage, das Kraftfahrzeug 6 automatisch auszuparken. Dazu sendet die Kommunikationseinheit 2 der Vorrichtung 1 das drahtlose Signal auf den Kanal 16, der in der Datenbank 3 für das Kraftfahrzeug 6 hinterlegt ist. Die Einrichtung 8 des Kraftfahrzeugs 6 empfängt dieses Signal und versetzt die Einrichtung aus einem Ruhemodus in den aktiven Modus. In diesem aktiven Modus kann der automatische Ausparkvorgang durchgeführt werden.

Die Fahrzeuge 4 und 5 werden nicht aus dem Ruhemodus in den aktiven Modus versetzt, da diese nicht auf dem Kanal 16, der für das Kraftfahrzeug 6 reserviert ist, auf Empfang sind. Dadurch wird eine zusätzliche Beanspruchung der Fahrzeugbatterie vermieden, da die Fahrzeuge im Ruhemodus verbleiben können, bis ihr Aufwecksignal auf ihrer Frequenz 17 bzw. 19 gesendet wird.

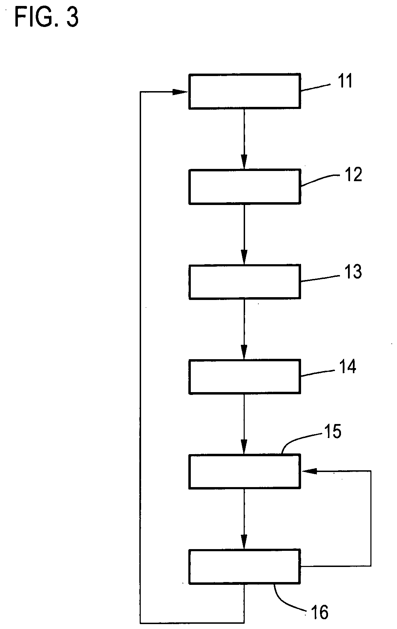

In Fig. 3 ist ein Ablaufdiagramm des Verfahrens dargestellt. Das Verfahren startet in Block 11, der den aktiven Modus des Kraftfahrzeugs 7 darstellt. Vom aktiven Modus in Block 11 kann auf den Block 12 weitergeleitet werden, indem von einer Einrichtung 8 des Kraftfahrzeugs eine Anfrage an die Kommunikationseinheit 2 der Vorrichtung 1 gesendet wird. In Block 12 wird von der Vorrichtung 1 überprüft, welcher Kanal in der Datenbank 3 verfügbar ist. Die Datenbank 3 verfügt hierbei über ausreichend freie Kanäle 17 - 20, damit alle Stellplätze der Parkfläche 21 zugeordnet werden können. Somit wäre, falls die Datenbank 3 nur über exakt dieselbe Anzahl an Kanäle wie Stellplätze verfügt, der Fall, dass kein Kanal für ein Fahrzeug frei ist, nur dann möglich, wenn die Parkfläche 21 bereits voll besetzt ist.

Ist dies nicht der Fall, wird von Block 12 zu Block 13 gegangen. Hierbei wird dem Kraftfahrzeug 7 ein freier Kanal 20 zugeordnet und dieser festgelegt. Dies wird zum einen in der Datenbank 3 eingetragen und fahrzeugseitig beispielsweise in der Kommunikationseinheit 2 der Vorrichtung 1 gespeichert. Die Vorrichtung 1 kann über weitere Möglichkeiten verfügen, in der der entsprechende Kanal 20 festgelegt und eingetragen wird, wie z. B. eine Steuerungseinrichtung. Falls der Fahrer des Kraftfahrzeugs 7 über ein Mobilteil 10 verfügt, wird der entsprechende Kanal 20 auch dort eingetragen. Anschließend führt das Ablaufdiagramm von Block 13 zu Block 14, in dem ein automatisches Parken des Kraftfahrzeugs 7 durchgeführt wird. Da sämtliche Steuerbefehle vorzugsweise auf demselben Kanal 20 übertragen werden, der für die Einrichtung 8 des Kraftfahrzeugs 7 festgelegt wurde, erfolgt keine Störung, in Form eines Versetzens der übrigen Fahrzeuge 4 - 6 aus dem Ruhemodus in den aktiven Modus, da diesem die Kanäle 17 - 19 zugeordnet sind.

Demnach kann von Block 14 auf Block 15 gegangen werden, in dem der Ruhemodus vorliegt. Hierbei wird von Block 15 zu Block 16 gegangen, in dem überprüft wird, ob ein drahtloses Signal zum Aufwecken auf dem Kanal 20, also zum Versetzen der Einrichtung 8 des Kraftfahrzeugs 7 aus dem Ruhemodus in den aktiven Modus empfangen wird. Ist dies nicht der Fall, wird von Block 16 auf Block 15 verzweigt, in dem weiterhin der Ruhemodus vorliegt. Demnach wird der Ruhemodus solange beibehalten, bis in Block 16 das Signal zum Aufwecken empfangen wurde. Ist dies der Fall, wird von Block 16 auf Block 11 verzweigt, das Kraftfahrzeug 7 also von dem Ruhemodus in den aktiven Modus versetzt. Nun kann der automatische Ausparkvorgang eingeleitet werden.

## Patentansprüche

1. Anordnung zum Steuern jeweils einer Einrichtung (8) von Kraftfahrzeugen (4 - 7) über eine drahtlose Kommunikationsverbindung innerhalb eines Kommunikationsbereichs einer Vorrichtung (1) umfassend eine Kommunikationseinheit (2), mit mehreren Einrichtungen (8), von denen jeweils eine in einem Kraftfahrzeug (4 - 7) angeordnet ist, wobei die Anordnung die Vorrichtung (1) und die Einrichtungen (8) umfasst, wobei die Kommunikationseinheit (2) der Vorrichtung (1) dazu ausgebildet ist, durch Aussenden eines drahtlosen Signals die jeweilige Einrichtung (8) der Kraftfahrzeuge (4 - 7) aus einem Ruhemodus in einen aktiven Modus zu versetzen, wobei eine Steuerungseinrichtung der Vorrichtung (1) oder die Einrichtungen (8) dazu jeweils ausgebildet sind, in dem aktiven Modus eine in einer Datenbank (3) der Vorrichtung (1) zu speichernde Frequenz und/oder einen Kanal (17 - 20) zum Senden und/oder Empfangen des drahtlosen Signals festzulegen, wobei nach dem Festlegen der Frequenz und/oder des Kanals (17 - 20) das von der Kommunikationseinheit (2) der Vorrichtung (1) gesendete Signal durch eine Kommunikationseinheit der jeweiligen Einrichtung (8) nur auf der festgelegten Frequenz und/oder dem festgelegten Kanal (17 - 20) empfangbar und die Einrichtung (8) nur dann aus dem Ruhemodus in den aktiven Modus versetzbar ist.

2. Anordnung nach Anspruch 1,
**dadurch gekennzeichnet,**
**dass** die Vorrichtung (1) ortsfest im Bereich einer Parkfläche angeordnet ist.

3. Anordnung nach Anspruch 1 oder 2,
**dadurch gekennzeichnet,**
**dass** die Kommunikationseinheit (2) dazu ausgebildet ist, mittels wenigstens eines weiteren Signals das Kraftfahrzeug (4 - 7) zu parken.

4. Anordnung nach einem der vorangehenden Ansprüche,
**dadurch gekennzeichnet,**
**dass** ein tragbares Mobilteil (10) zusätzlich zu der Vorrichtung (1) dazu ausgebildet ist, das drahtlose Signal zu senden und/oder zu empfangen.

5. Verfahren zum Steuern jeweils einer Einrichtung (8) von Kraftfahrzeugen (4 - 7) über eine drahtlose Kommunikationsverbindung innerhalb eines Kommunikationsbereichs einer Vorrichtung (1) umfassend eine Kommunikationseinheit, mit mehreren, jeweils in einem Kraftfahrzeug (4 - 7) angeordneten Einrichtungen (8), wobei eine Kommunikationseinheit (2) der Vorrichtung (1) ein drahtloses Signal aussendet und hierdurch die Einrichtungen (8) der Kraftfahrzeuge (4 - 7) jeweils aus einem Ruhemodus in einen aktiven Modus versetzt, wobei eine Steuerungseinrichtung der Vorrichtung (1) oder die Einrichtungen (8) in dem aktiven Modus eine Frequenz und/oder ein Kanal (17 - 20) zum Senden und/oder Empfangen des Signals festlegt, die in einer Datenbank (3) der Vorrichtung (1) gespeichert wird, wobei nach dem Festlegen der Frequenz und/oder des Kanals (17 - 20) das Signal durch die jeweilige Einrichtung (8) nur auf der festgelegten Frequenz und/oder dem festgelegten Kanal (17 - 20) empfangen und das jeweilige Kraftfahrzeug (4 - 7) aus dem Ruhemodus in den aktiven Modus versetzt wird.

6. Verfahren nach Anspruch 5,
**dadurch gekennzeichnet,**
**dass** ein tragbares Mobilteil (10) oder die Vorrichtung (1) das drahtlose Signal sendet und/oder empfängt.

7. Verfahren nach Anspruch 5 oder 6,
**dadurch gekennzeichnet,**
**dass** das Kraftfahrzeug (4 - 7) geparkt wird, wenn ein entsprechendes Signal von der jeweiligen Einrichtung (8) der Kraftfahrzeuge (4 - 7) empfangen wird.

## Claims

1. Arrangement for controlling a device (8) of motor vehicles (4 - 7) respectively via a wireless communication connection within a communication region of an apparatus (1) comprising a communication unit (2), with several devices (8), of which respectively one is arranged in a motor vehicle (4 - 7), wherein the arrangement comprises the apparatus (1) and the devices (8), wherein the communication unit (2) of the apparatus (1) is designed, by sending out a wireless signal, to transpose the respective device (8) of the motor vehicles (4 - 7) from a resting mode into an active mode, wherein a controlling device of the apparatus (1), or the devices (8) are respectively designed, in the active mode, to specify a frequency to be saved in a database (3) of the apparatus (1), and/or a channel (17 - 20) for sending and/or receiving the wireless signal, wherein after the specifying of the frequency and/or of the channel (17 - 20) the signal sent by the communication unit (2) of the apparatus (1) can be received by a communication unit of the respective device (8) only on the specified frequency and/or the specified channel (17 - 20) and the device (8) can only then be transposed out of the resting mode into the active mode.

2. Arrangement according to claim 1,
**characterised in**
**that** the apparatus (1) is arranged in a stationary manner in the region of a parking area.

3. Arrangement according to claim 1 or 2,
**characterised in**
**that** the communication unit (2) is designed to park the motor vehicle (4 - 7) by means of at least one further signal.

4. Arrangement according to any of the preceding claims,
**characterised in**
**that** a portable mobile part (10) additional to the apparatus (1) is designed to send and/or to receive the wireless signal.

5. Method for controlling a device (8) of motor vehicles (4 - 7) respectively via a wireless communication connection within a communication range of an apparatus (1), comprising a communication unit, with several devices (8) arranged respectively in a motor vehicle (4 - 7), wherein a communication unit (2) of the apparatus (1) sends out a wireless signal and hereby transposes the devices (8) of the motor vehicles (4 - 7) respectively out of a resting mode into an active mode, wherein a control device of the apparatus (1), or the devices (8) in the active mode specifies a frequency and/or a channel (17 - 20) for sending and/or receiving the signal, which frequency is stored in a database (3) of the apparatus (1), wherein after the specifying of the frequency and/or of the channel (17 - 20) the signal is received by the respective device (8) only at the specified frequency and/or the specified channel (17 - 20) and the respective motor vehicle (4 - 7) is transposed out of the resting mode into the active mode.

6. Method according to claim 5,
**characterised in**
**that** a portable mobile part (10) or the apparatus (1) sends and/or receives the wireless signal.

7. Method according to claim 5 or 6,
**characterised in**
**that** the motor vehicle (4 - 7) is parked when an appropriate signal is received by the respective device (8) of the motor vehicles (4 - 7).

## Revendications

1. Agencement pour la commande respectivement d'un appareil (8) de véhicules automobiles (4-7) par le biais d'une liaison de communication sans fil dans une zone de communication d'un dispositif (1) comprenant une unité de communication (2), avec plusieurs appareils (8) dont respectivement un est agencé dans un véhicule automobile (4-7), dans lequel l'agencement comporte le dispositif (1) et les appareils (8), dans lequel l'unité de communication (2) du dispositif (1) est réalisée afin de faire passer par émission d'un signal sans fil l'appareil (8) respectif des véhicules automobiles (4-7) d'un mode de repos à un mode actif, dans lequel un appareil de commande du dispositif (1) ou les appareils (8) sont réalisés respectivement afin de déterminer dans le mode actif une fréquence à enregistrer dans une base de données (3) du dispositif (1) et/ou un canal (17-20) pour l'émission et/ou la réception du signal sans fil, dans lequel après la détermination de la fréquence et/ou du canal (17-20) le signal émis par l'unité de communication (2) du dispositif (1) peut être reçu par une unité de communication de l'appareil (8) respectif seulement sur la fréquence fixée et/ou le canal fixé (17-20) et l'appareil (8) peut être passé seulement ensuite du mode de repos au mode actif.

2. Agencement selon la revendication 1,
**caractérisé en ce**
**que** le dispositif (1) est agencé fixement dans la zone d'une aire de stationnement.

3. Agencement selon la revendication 1 ou 2,
**caractérisé en ce**
**que** l'unité de communication (2) est réalisée afin de stationner au moyen d'au moins un autre signal le véhicule automobile (4-7).

4. Agencement selon l'une quelconque des revendications précédentes,
**caractérisé en ce**
**qu'**une partie mobile portable (10) est réalisée outre le dispositif (1) afin d'émettre et/ou de recevoir le signal sans fil.

5. Procédé de commande respectivement d'un appareil (8) de véhicules automobiles (4-7) par le biais d'une liaison de communication sans fil dans une zone de communication d'un dispositif (1) comprenant une unité de communication, avec plusieurs appareils (8) agencés respectivement dans un véhicule automobile (4-7), dans lequel une unité de communication (2) du dispositif (1) émet un signal sans fil et fait passer ainsi les appareils (8) des véhicules automobiles (4-7) respectivement d'un mode de repos à un mode actif, dans lequel un appareil de commande du dispositif (1) ou les appareils (8) fixent dans le mode actif une fréquence et/ou un canal (17-20) pour l'émission et/ou la réception du signal, qui est enregistré dans une base de données (3) du dispositif (1), dans lequel après la fixation de la fréquence et/ou du canal (17-20) le signal est reçu par l'appareil (8) respectif seulement sur la fréquence fixée et/ou le canal fixé (17-20) et le véhicule automobile respectif (4-7) est passé du mode de repos au mode actif.

6. Procédé selon la revendication 5,
**caractérisé en ce**
**qu'**une partie mobile portable (10) ou le dispositif (1) émet et/ou reçoit le signal sans fil.

7. Procédé selon la revendication 5 ou 6,
**caractérisé en ce**
**que** le véhicule automobile (4-7) est stationné, lorsqu'un signal correspondant est reçu par l'appareil (8) respectif des véhicules automobiles (4-7).
